# EUROPÄISCHE PATENTSCHRIFT

(11) **EP 1 342 341 B1**
(45) Veröffentlichungstag und Bekanntmachung des Hinweises auf die Patenterteilung: **28.06.2006**
(21) Anmeldenummer: 01994640.9
(22) Anmeldetag: 06.11.2001
(51) Int. Cl.: H04L 12/00

(54) **VERFAHREN UND VORRICHTUNG ZUR BEREITSTELLUNG EINER ZEITINFORMATION IN EINEM HAUSGERÄT**
METHOD AND DEVICE FOR PROVIDING TEMPORAL INFORMATION IN A HOUSEHOLD APPLIANCE
PROCEDE ET DISPOSITIF DE MISE A DISPONIBILITE D'UNE INFORMATION TEMPORELLE DANS UN APPAREIL DOMESTIQUE

(30) Priorität: 15.11.2000 DE 10056497
(43) Veröffentlichungstag der Anmeldung: 10.09.2003
(73) Patentinhaber: BSH Bosch und Siemens Hausgeräte GmbH, 81739 München (DE)
(72) Erfinder: BERTHOLD, Arndt, 04105 Leipzig (DE); BÖLDT, Frank, 14656 Brieselang (DE)
(86) Internationale Anmeldenummer: PCT/EP2001/012834
(87) Internationale Veröffentlichungsnummer: WO 2002/041567

(56) Entgegenhaltungen:
- EP-A- 0 062 218
- EP-A- 0 484 833
- EP-A- 0 811 942
- WO-A-00/46965
- WO-A-99/65192
- DE-A- 19 819 127
- US-A- 5 251 191

## Beschreibung

Die vorliegende Erfindung betrifft ein Verfahren zur Bereitstellung einer Zeitinformation in einem Hausgerät, eine dementsprechende Vorrichtung und ein System zur Bereitstellung einer Zeitinformation.

Die Bereitstellung einer Zeitinformation mit der darauf aufbauenden Verarbeitung dieser Information spielt in Hausgeräten eine immer wichtiger werdende Rolle. Hausgeräte sind bereits seit Jahren mindestens teilweise programmgesteuert und zeigen einem Anwender nach außen den Fortschritt eines jeweilig vorgewählten bzw. eingestellten Programms an. Hausgeräte höher Preiskategorien weisen hierzu verschiedene Anzeigen oder Anzeigemodi auf, von denen eine Restzeitanzeige nur als ein Beispiel genannt werden soll. Ferner sind derartige Hausgeräte nicht nur hinsichtlich des Umfangs ihrer Aktivität, sondern durch eine Endezeitvorwahl, eine Startzeitvorwahl und ähnliches auch zeitlich programmierbar. Zudem sind in bekannten Hausgeräten häufig auch normale Uhren integriert, die neben der Anzeige einer aktuellen Uhrzeit auch als Uhrzeitanzeige für eine Programmierung beispielsweise unter Nutzung besonderer Nachtstromtarife etc. als Schaltsignalgeber dienen.

In bekannten Hausgeräten werden Zeitfunküonen über Zeitgeber bzw. Timer in den Steuerungen mechanisch oder elektronisch realisiert, wobei durch diese Zeitgeber nur eine relative Zeit erzeugt wird. Oder es werden gepufferte Zeitbausteine verwendet, die zwar eine System-interne Zeit bereitstellen, sich aber durch Gangungenauigkeiten oder Zeitschlupf gegenüber anderen Uhren im Haushalt bzw. der Normalzeit einer jeweiligen Zeitzone allmählich verstellen. Systembedingt müssen derartige Uhren an Hausgeräten also häufig nachgestellt werden, mindestens jedoch bei jeder Sommerzeit/Winterzeit-Umstellung.

Eine Energiepufferung derartiger Zeitgeber ist ebenfalls problematisch, insbesondere bei längerem Energieausfall oder langen Stillstandszeiten des Hausgerätes. Bei Stillstandszeiten wird mit Rücksicht auf eine minimale Leistungsaufnahme der betreffenden Hausgeräte im passiven Zustand die Hauptenergieversorgung zentral unterbrochen, um einen effektiven Beitrag zur Einsparung von Energie zu leisten.

In EP 0 062 218 A2 ist ein System zur zeitrichtigen Steuerung von zeitanzeigenden und/oder zeitauswertenden Geräten gezeigt, bei der für eine Wohn- oder Gebäudeeinheit jeweils eine separate erste Baueinheit in Form einer Funkuhr vorgesehen ist, die zum Empfang der von einem Rundfunksender abgestrahlten codierten Zeitinformation geeignet ist, und die eine Einkoppeleinrichtung aufweist, mit der die Zeitinformation über das in der Wohn- oder Gebäudeeinheit installierte Stromversorgungsnetz übertragen wird. Die an das Stromversorgungsnetz angeschlossenen mit der Zeitinformation zu versorgende Geräte weisen ihrerseits jeweils eine Auskoppeleinrichtung für das die Zeitinformation beinhaltende Signal und entsprechende Auswerteeinrichtung zur Auswertung der Zeitinformation auf. Dieses System hat den Nachteil, dass die Zeitinformation permanent in dem Stromnetz zur Verfügung stehen muss, damit die Zeitinformation zu dem Zeitpunkt zur Verfügung steht, zu dem die Geräte sie benötigen.

Es ist daher Aufgabe der vorliegenden Erfindung, ein verbessertes Verfahren und eine dementsprechende Vorrichtung zur Bereitstellung einer Zeitinformation in Hausgeräten zu schaffen.

Diese Aufgabe wird erfindungsgemäß durch ein Verfahren mit den Merkmalen von Anspruch 1 und durch eine Vorrichtung mit den Merkmalen von Anspruch 12 gelöst. Vorteilhafte Weiterbildungen der Erfindung sind Gegenstand der jeweiligen Unteransprüche.

Ein erfindungsgemäßes Verfahren sieht vor, dass ein Hausgerät mit einem verteilten Netz oder einem Netzwerk in Verbindung steht. Als Teil eines solchen Netzwerkes ist das Hausgerät zum Empfang einer Zeitinformation über das Netzwerk ausgebildet. Damit kann ein Dienstanbieter Informationen der genannten Art jederzeit zu einem erfindungsgemäßen Hausgerät versenden, wobei diese Informationen nur in elektronischer Form über das Netz übersandt werden. Die Versendung über ein verteiltes und damit weit verzweigtes Netz schafft eine ausreichend hohe Geschwindigkeit bei guter Ausfallsicherheit. Jede Form der Zeitanzeige an dem Hausgerät erfolgt dann auf Basis dieser Zeitinformation.

Erfindungsgemäß wird eine Meldung von einem Hausgerät aus an einen Dienstanbieter abgesandt, um eine Übermittlung einer Zeitinformation zu bewirken. Dabei wird im Rahmen der vorliegenden Erfindung unter dem Begriff der Meldung eine eindeutig identifizierbare Nachricht verstanden, die eine Kontaktaufnahme des Dienstanbieters mit dem Kunden am Standort des Hausgeräts und/oder einen weiteren Informationsaustausch ermöglicht. Die Meldung beinhaltet weiter eine Basisinformation, die beispielsweise in der Übersendung einer Seriennummer und/oder individuellen Gerätenummer bestehen kann, also der Adresse innerhalb des Netzes. Das Hausgerät meldet sich damit sozusagen bei dem Dienstanbieter an. So kann ein Dienstanbieter auf der Grundlage dieser Information eine sendende Gerätegruppe oder sogar das sendende Hausgerät und dessen Nutzer separat über das verteilte Netzwerk ansprechen. Die Häufigkeit der Nutzung eines Hausgerätes, wie beispielsweise einer Waschmaschine, läßt in einfacher Weise Rückschlüsse auf einen Bedarf an Betriebsmitteln zu, hier z.B. an Waschmittel. Auf diese Weise sammelt sich mit der Zeit bei einem Dienstanbieter automatisch Wissen über individuelles Verbraucherverhalten in Form der über das Netz eingegangenen Meldungen an. Dem Dienstanbieter stehen vorteilhafterweise Möglichkeiten zur Analyse dieser Daten offen mit der Chance zur schnellen Nutzung für eigene Produkte durch Erstellen gezielter Werbung und deren Übersendung über das Netz an das Hausgerät zur Anzeige z.B. auf einem Display dieses Gerätes. Ferner ist auch eine differenzierte Vermarktung dieser aufbereiteten Information an Dritte möglich.

Erfindungsgemäß versendet der Dienstanbieter die Zeitinformation selektiv an ein bestimmtes Hausgerät über das Netz, vorzugsweise unter Verwendung einer individuellen Gerätenummer als Adresse. Die Gerätenummer des Hausgerätes ist eine individuelle alphanumerische Zeichenfolge, die als eindeutiges Kennzeichen in dem Hausgerät intern abgelegt ist, z. B. in einem nicht-flüchtigen Speicherbaustein. Diese Gerätenummer kann dabei neben dem Gerätetyp noch spezielle Informationen enthalten, wie beispielsweise Informationen über besondere Baugruppen, eines Standard-Software, Daten zum Fertigungsdatum und der Herstellungsstätte etc. Eine individuelle Einstellung des Hausgerätes, beispielsweise beim Verkauf, muß also vorteilhafterweise nicht erfolgen. Damit können verschiedene Hausgeräte individuell mit einer Zeitinformation versorgt werden, die von ihrem Gerätetyp oder weiteren Faktoren abhängig sein kann.

Eine Anbindung von Hausgeräten an ein Netzwerk ist bekannt. Ein System zur Vernetzung von Hausgeräten an sich ist beispielsweise aus der Produktschrift "Das Siemens Home Electronic System HES" der Siemens Electrogeräte GmbH, München, von 1997 bekannt. Zentrale Basis für diese Steuerung und Benutzung von Hausgeräten als vernetzte Applikationen ist ein PC, über den sich Hausgeräte innerhalb des HES steuern und kontrollieren lassen. Hierzu werden viele inteme Zustände der angeschlossenen Hausgeräte abgebildet. Die HES-Applikation ist PC-basiert und dadurch in starkem Maße plattformabhängig. In keinem Fall werden Informationen von außen in das lokale Netz hineingelassen, so dass ein HES als lokales Netz für einen externen Dienstanbieter nicht erreichbar ist. So ist eine Verwendung von Schnittstellen eines HES-Systems zur Verbindung zu einem globalen Netz auch nicht bekannt.

Vorteilhafterweise wird die Bereitstellung einer Zeitinformation in einer Ausführungsform der Erfindung dadurch verbessert, dass diese Information in Abständen wiederholt an das Hausgerät über das Netz übertragen wird, wobei die Übersendung aufeinanderfolgender Informationen vorzugsweise in genau festgelegtem zeitlichen Abstand erfolgt. Zur System-internen Zeitfortschreibung innerhalb des Hausgerätes müssen so nur sehr geringe Maßnahmen ergriffen werden, so dass hier der Aufwand an Hard- und Software gemindert werden kann.

In einer Weiterbildung der Erfindung findet bei der Übermittlung einer Zeitinformation eine Abstufung im Informationsgehalt der übermittelten Information dahingehend statt, dass die Informationsübersendung in die Übermittlung einer vollständigen Zeitangabe und die Übersendung von Impulsen zur Zeitfortschreibung aufgeteilt wird. Dadurch wird die Menge der zu übersendenden Information gemindert und das Netz als Übertragungskanal entlastet. Die Impulse werden vorzugsweise zur Synchronisation der in dem Hausgerät intern vorgenommenen Zeitfortschreibung genutzt und können daher auch als ein Paket mehrerer Zeitimpulse, die gegeneinander einen definierten Zeitabstand aufweisen, versendet werden. Damit ist dann die Vorgabe einer Systemzeit und eine Synchronisation über eine übliche Programmlaufzeit abgeschlossen. Ähnliche und weitere alternative Verfahren sind z. B. aus dem Bereich der Funkuhren bekannt, allerdings sind die hier zum Empfang und zur Signalaufbereitung verwendeten elektronischen Bausteine relativ teuer. Ferner ist der Empfang häufig beeinträchtigt, insbesondere in Kellerräumen. Hausgeräte sollen aber völlig unabhängig von einem Standort immer genau funktionieren. Zudem ist ein erfindungsgemäß vorgesehener Zugang zu einem global verzweigten Netz neben der Übermittlung einer Zeitinformation auch für andere Daten- bzw. Informationsdienste ohne wesentliche Einschränkung der Leistungsfähigkeit nutzbar.

Vorzugsweise sendet ein Hausgerät gemäß einer Weiterbildung der Erfindung eine Meldung bei Start eines Programms über das Netz an den Dienstanbieter ab. Bei der Anforderung eines Dienstes handelt es sich beispielsweise um die Aufforderung zur Übertragung oder Bereitstellung eines aktuelleren und/oder optimierten Maschinenprogramms. Zur verbesserten Einstellung werden vom Hausgerät aus auch aktuelle Systemdaten des Hausgerätes für die spezielle Anwendung mit übermittelt, beispielsweise ein Füllgrad einer Waschmaschine, Härtegrad des Wassers und Art der zu waschenden Wäsche in der Waschmaschine. Selbstverständlich stehen auch diese Daten dem Dienstanbieter zur nachfolgenden Auswertung und gegebenenfalls anderweitigen Verwertung zur Verfügung, wie vorstehend ausgeführt.

Ferner kann es sich bei der Meldung um eine Aufforderung zur Übertragung eines Updates zur Erneuerung der Steuerungssoftware auf das Hausgerät handeln, die ebenfalls von dem Dienstanbieter in einer Datenbasis bereitgehalten werden kann. Durch derartige Maßnahmen der Software-Erneuerung wird die Standzeit eines Hausgerätes durch Erweiterung der Funktionalität nachhaltig verlängert, so dass sich die Anschaffungskosten für das Hausgerät über einen längeren Betriebszeitraum besser rechnen. Vorteilhafterweise kann ein Hausgerät auch nach Absendung einer Meldung durch den Dienstanbieter mit Steuerbefehlen versorgt werden. Das Hausgerät wird dann quasi von dem Dienstanbieter aus ferngesteuert, wobei keine Software mehr übertragen werden muß. Auch die Anzeigeeinrichtungen werden dann vom Dienstanbieter aus mit Information versorgt, so erfolgt beispielsweise die Berechnung der lokalen Uhrzeit und einer Programm-Restlaufzeit etc. hochgenau und zentral beim Dienstanbieter.

Der Zugang eines Hausgerätes bzw. dessen Verbindung mit dem verteilten Netz kann vorteilhafterweise direkt oder indirekt erfolgen. Bei einem indirekten Zugang ist das Hausgerät beispielsweise über ein lokales Netzwerk mit dem verteilten Netz verbunden, z.B. ein HES als kabel- bzw. leitungsgebundes System. Damit können im Rahmen der vorliegenden Erfindung auch die vorteilhaften Eigenschaften lokaler Netze mit einer Verschaltung unterschiedlicher Geräte in einem Haushalt genutzt werden, beispielsweise zur Anzeige und/oder Ausgabe einer aktuellen Zeitinformation. Alternativ kann die Anbindung des Hausgerätes an ein lokales Netzwerk auch drahtlos erfolgen, beispielsweise über Funk oder Infrarot-Datenverkehr. Gerade bei einem drahtlosen Datenaustausch kann das Hausgerät in einer Ausführungsform der Erfindung jedoch auch durch eine Funkverbindung in Form einer Weitverbindung mit einem Dienstvermittler als Anbieter und/oder Betreiber eines verteilten Netzes stehen. Durch diese schnelle Direktverbindung kann ein alternativ vorhandener Anschluß an ein lokales Datennetz umgangen werden, um beispielsweise eine Meldung mit ihrem relativ knappen Dateninhalt schneller an einen Dienstanbieter zu übermitteln. Auch das Rücksignal umfaßt nur eine geringe Datenmenge, so daß es ebenfalls auf diesem Weg übersandt werden kann. Es kann der Dienstanbieter dazu aber bei gegebener Infrastruktur auch direkt von dem Hausgerät aus drahtlos kontaktiert werden.

Als globales Netzwerk ist in einer Ausführungsform der Erfindung das Internet vorgesehen, mit dem das Hausgerät über eine Telefonleitung verbunden sein kann. Vorzugsweise wird das Hausgerät jedoch über die Stromleitung als Datenverbindung mit dem Dienstanbieter verbunden. So ist für die Energieversorgung und den Zugriff auf das globale Netz nur noch ein Anschluß und nur ein Leitungssystem vorzusehen. Bauliche Erweiterungen in älteren Haushalten können somit entfallen, und erfindungsgemäße Hausgeräte sind universell einsetzbar. Die vorstehenden Ausführungen zur drahtlosen Anbindung gelten hierzu entsprechend.

Die über das Netz übersandte Information wird in dem Hausgerät und/oder bei Anbindung des Hausgerätes an ein lokales Netz in dem Haushalt auf einem anderen Gerät gespeichert oder verarbeitet. In Verbindung mit einem der vorstehenden Merkmale einer bevorzugten Weiterbildung der Erfindung ergibt sich so die Möglichkeit, dass eine Zeitinformation für mehrere über ein lokales Netz miteinander verbundene Hausgeräte gemeinsam in einen Haushalt übertragen wird.

Durch ein erfindungsgemäßes Verfahren und eine dementsprechende Vorrichtung werden neue und sehr vorteilhafte Möglichkeiten zur Übermittlung von Zeitinformation in einen Haushalt geschaffen. Hierdurch werden neben den vorstehend exemplarisch aufgegriffenen Vorteilen effektive Beiträge zur Senkung der Kosten für eine Übermittlung von ständig aktueller Information und deren möglicher Erweiterung in dem beschriebenen Rahmen geleistet. Die mit der elektronischen Erstellung bzw. Auswertung der Zeitinformation verbundenen Kosten für den Betreiber eines Hausgerätes bei Anschaffung und Betrieb treten weit hinter die herkömmlicher Verfahren. Dabei ist eine stets ausreichende Erreichbarkeit des Hausgerätes für das Zeitsignal oder des Dienstanbieters für eine Meldung weitgehend sichergestellt. Insbesondere entfallen die Kosten für einen internen Puffer zur Überbrückung eines ausgeschalteten Zustands des Hausgerätes und für Zeitgeberbausteine, was auf der Seite der Elektronik des Hausgerätes zu einer Einsparung führt. Ein Zeitstellen an einem erfindungsgemäßen Hausgerät ist auch nach dem Kauf oder einem Systemneustart nach einem Stromausfall nicht mehr erforderlich, wobei die interne Zeit des Hausgerätes der realen Uhrzeit auch nicht mehr wegläuft. Ferner werden durch ein erfindungsgemäßes Verfahren die bekannten Probleme bei Sommerzeit- / Winterzeitumstellung beseitigt, da sich diese Umstellung automatisch vollzieht.

Schließlich offenbart ein erfiridungsgemäßes Verfahren auch ein neues Geschäftsfeld für den Hersteller von erfindungsgemäßen Hausgeräten als vorzugsweise jederzeit verfügbarer Dienstvermittler bzw. Netzanbieter und/oder Dienstanbieter. Dabei werden die erforderlichen Informationen im wesentlichen in Form elektronischer Daten verarbeitet, so dass zur Bereitstellung der Information nur noch ein modemes Zeitmeßsystem und ein Server-Rechner mit einem entsprechenden Netz benötigt werden.

Nachfolgend wird ein Ausführungsbeispiel der Erfindung anhand der Zeichnung näher erläutert. In der Zeichnung zeigt:
- Figur 1:: ein Logikdiagramm zur prinzipiellen Darstellung eines erfindungsgemäßen Informationssystems und
- Figur 2:: eine skizzierte Darstellung eines Systems vernetzter Hausgeräte.

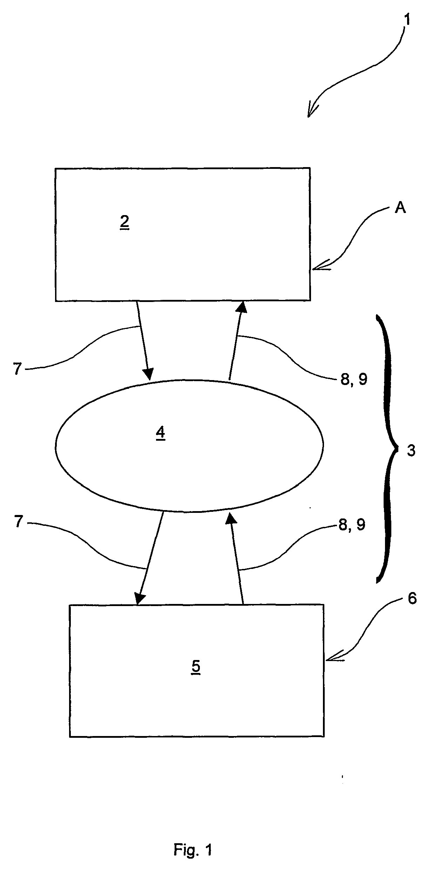

Ein erfindungsgemäßes System 1 (Fig. 1) umfaßt ein Hausgerät 2, das sich an einem Ort A eines Dienstnehmers befindet, also bei dem Betreiber des Hausgeräts 2 als Kunden des Systems 1. Über ein globales Netz 3 eines Dienstvermittlers 4 ist das Hausgerät 2 mit einer Recheneinheit 5 eines Dienstanbieters 6 verbunden, die zur Aufbereitung einer Meldung 7 des Hausgerätes 2 und zur Versendung von Zeitinformationen 8 bereitsteht.

Zur Herstellung eines Kontakts des Kunden am Standort A des Hausgeräts 2 mit dem Dienstanbieter 6 wird eine Meldung 7 von einem Hausgerät 2 aus an den Dienstanbieter 6 abgesandt. Diese Meldung 7 beinhaltet eine individuelle Gerätenummer des Hausgeräts 2 als Adresse innerhalb des Netzes 3, durch die das betreffende Hausgerät 2 sich auch innerhalb einer Gruppe gleichartiger Geräte eindeutig unterscheidet, ohne selber nach seinem Standort A bekannt zu sein. Damit ist das Hausgerät 2 durch den Dienstanbieter 6 separat über das verteilte Netzwerk 3 zur Übermittlung der Zeitinformation 8 ansprechbar.

Das Hausgerät 2 sendet die Meldung 7 bei Anforderung eines Dienstes 9 über das Netz 3 an den Dienstanbieter 6 ab. Bei diesen Diensten 9 handelt es sich beispielsweise um die Aufforderung zur elektronischen Übertragung eines aktuelleren und/oder optimierten Maschinenprogramms oder um ein Update der Steuerungssoftware des Hausgerätes 2, die ebenfalls von dem Dienstanbieter 6 in einer zu der Rechnereinheit 5 gehörenden Datenbasis für den anhand der Adresse erkennbaren Gerätetyp des rufenden Hausgerätes 2 bereitgehalten werden.

Mit dem Start eines Programms sendet das Hausgerät 2 zusammen mit der Meldung 7 auch aktuelle Zustandsinformationen an den Dienstanbieter, der daraufhin zusammen mit der Zeitinformation 8 eine Berechnung einer Endezeit auf der Grundlage der übersandten Zustandsinformationen durchführt und das Ergebnis als Dienst 9 an das Hausgerät 2 rückübermittelt. Die Fortschreibung der Systemzeit erfolgt danach auf der Basis der Zeitinformation 8 wieder ohne Beteiligung des Dienstanbieters 6 in dem Hausgerät 2 selber.

Durch diese stete Erneuerung der Systemzeit mit Erweiterung der Funktionalität des Hausgerätes 2 um eine auf aktuelle Zustandsinformationen abgestellte Angabe einer Endezeit wird die Nutzungsdauer des Hausgerätes 2 zu verlängern. Diesen konkreten Vorteil will der Kunde nutzen. Der Dienstanbieter 6 finanziert seinen Aufwand dadurch, dass er die Zustandsinformationen eines jeweiligen Kunden auswertet, um so den Kunden am Standort A mit produktspezifischer Information und Werbung 7 zu versorgen. Weitere Meldungen 7 des Hausgerätes 2 verbessern die Aufbereitung der Werbung 7 für den jeweiligen Kunden. So kann ein Kundenprofil erstellt werden, wobei individuell zugeschnittene Information oder Werbung auf einem Display des Hausgerätes 2 angezeigt wird. Diese Werbung finanziert den Aufwand des Dienstanbieters 6 und kann darüber hinaus auch zur Subventionierung des Hausgerätes 2 beim Neukauf eingesetzt werden.

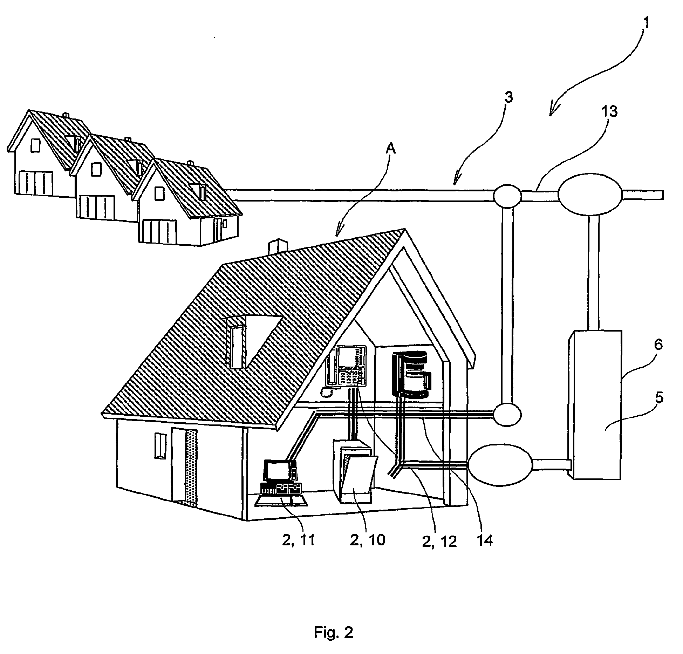

Figur 2 zeigt eine skizzierte Darstellung eines Informationssystems 1 mit diversen vernetzten Hausgeräten 2 in einem exemplarisch dargestellten Haushalt an dem Standort A. Dabei sind alle der schematisch dargestellten Hausgeräte, wie z. B. Spülmaschine 10, Computer 11, Telefon 12, oder Kaffeemaschine, zur Versendung einer Meldung 7 über das Netzwerk 3 an den Dienstanbieter 6 ausgebildet. Als Übertragungsweg bzw. globales Netz 3 außerhalb des Haushalts ist in diesem Fall die Stromversorgungsleitung 13 vorgesehen, an die jedes der Hausgeräte 2 zur Versorgung mit elektrischer Energie zwingend angeschlossen sein muß. Dabei ist jedes Hausgerät 2 mit einer individuellen Kennung versehen, nämlich seiner individuellen Herstellungsnummer als Adresse in dem Netz 3. So werden in diesem Haushalt an jedem Hausgerät 2 Zeitinformationen 8 empfangen. Eine Meldung 7 eines der genannten Hausgeräte veranlaßt den Dienstanbieter 6 automatisch zu einer dem Gerätetyp entsprechenden Auswahl von Daten und der Absendung von Zeitinformationen 8 und weiterer Informationen an den Kunden am Standort A.

Will der Kunde die Spülmaschine 10 in der Nacht laufen lassen, um einen günstigeren Stromtarif nutzen zu können, so gibt er ein bestimmtes Spülprogramm mit der Auswahl einer Startzeit vor. Die Spülmaschine 10 sendet daraufhin eine Meldung 7 mit allen aktuellen Zustandsparametern dieses Hausgerätes 2 an den Dienstanbieter 6 ab. Als Rückmeldung erhält die Spülmaschine 10 die Zeitinformation 8 mit zusätzlichen Zählimpulsen, um die inteme Zeitfortschreibung eventuell neu synchronisieren zu können. Danach ist die Startzeit korrekt eingestellt, auch wird eine Endezeit zu diesem Spülprogramm auf einem Display der Spülmaschine 10 angegeben.

Geht in der Spülmaschine 10 aber der flüssige Wasserenthärter schon fast aus, so dass er nur noch in einer geringen und für dieses gewählte Programm ausreichenden Menge vorhanden ist, ist dieser Parameter zusammen mit der Meldung 7 an den Dienstanbieter 6 übersandt worden. Neben dem Aufleuchten einer entsprechenden Betriebsanzeige an der Spülmaschine 10 selber sendet der Dienstanbieter 6 unter der Kennung der Spülmaschine 10 auch eine werbende Information über empfohlene Wasserenthärter, deren Hersteller, aktueller Preis und überregionale Anbieter etc. automatisch aus der Datenbasis an die Spülmaschine 10 zurück. Auch diese Information gelangt auf dem Display zur Anzeige, das als Klartextdisplay mehrzeilig aufgebaut ist. So können schon bei normalem Betrieb oder erfolgter Programmierung in dem Display die lokale und aktualisierte Uhrzeit zusammen mit einer Programmrestzeit und Endezeitvorwahl und/oder Startreitvorwahl für die Spülmaschine 10 angezeigt werden.

Das dargestellte Informationssystem 1 ist kompatibel zu einem schon existierenden lokalen Netz 14 gehalten, so dass auch auf der Basis des lokalen Netzes 14 eine Anzeige und/oder Wiedergabe an einem beliebig durch den Kunden wählbaren Hausgerät bzw. sonstigen elektrischen Gerät an dem Standort A erfolgen kann. Zudem wird auf diesem Wege eine Systemzeit innerhalb des gesamten lokalen Netzes 14 und aller angeschlossenen Hausgeräte 2 stets aktualisiert.

### Bezugszeichenliste

- 1: System
- 2: Hausgerät
- 3: globales Netz
- 4: Dienstvermittler
- 5: Recheneinheit
- 6: Dienstanbieter
- 7: Meldung
- 8: Zeitinformation
- 9: Dienst
- 10: Spülmaschine
- 11: Computer
- 12: Telefon
- 13: Stromversorgungsleitung
- 14: lokales Netz
- 15:

- A: Standort des Hausgerätes 2

## Patentansprüche

1. Verfahren zur Bereitstellung einer Zeitinformation in einem Hausgerät, wobei das Hausgerät über ein verteiltes Netzwerk mit einem Dienstanbieter in Verbindung steht und von diesem Dienstanbieter die Zeitinformation über das Netzwerk empfängt, **dadurch gekennzeichnet, dass** das Hausgerät (2) an einen Dienstanbieter (6) mit einer Meldung (7) eine Basisinformation übermittelt, um eine Übermittlung einer Zeitinformation (8) zu bewirken, und dass der Dienstanbieter (6) die Zeitinformation (8) aufgrund der Meldung (7) selektiv an das Hausgerät (2) über das Netzwerk (3) versendet.

2. Verfahren nach Anspruch 1, **dadurch gekennzeichnet, dass** die Basisinformation eine Seriennummer und/oder eine Gerätenummer des Hausgerätes (2) umfasst, und dass die Zeitinformation (8) an das Hausgerät (2) unter Verwendung der Seriennummer und/oder der Gerätenummer als Adresse versendet wird.

3. Verfahren nach Anspruch 1 oder 2, **dadurch gekennzeichnet, dass** das Hausgerät (2) die Meldung (7) bei Start eines Programms über das Netz (3) an den Dienstanbieter (6) absendet.

4. Verfahren nach einem der Ansprüche 1 bis 3, **dadurch gekennzeichnet, dass** in der Meldung (7) aktuelle Zustandsparameter des Hausgerätes (2) mit versendet werden.

5. Verfahren nach einem der Ansprüche 1 bis 4, **dadurch gekennzeichnet, dass** das Hausgerät (2) die Meldung (7) bei Anforderung eines Dienstes, insbesondere eines optimalen Maschinenprograrnms oder eines Updates einer Steuerungssoftware für das Hausgerät (2), über das Netz (3) an den Dienstanbieter (6) absendet.

6. Verfahren nach einem der Ansprüche 1 bis 5, **dadurch gekennzeichnet, dass** die Anforderungen oder Meldungen des Hausgerätes (2) durch den Dienstanbieter ausgewertet und/oder gesammelt werden, um differenzierte Kundenprofile zur eigenen und/oder fremden Nutzung zu erstellen und/oder individuelle und/oder situationsbezogene Werbung über das Netz (3) zu versenden.

7. Verfahren nach einem der vorhergehenden Ansprüche, **dadurch gekennzeichnet, dass** auf Basis der Zeitinformation (8) eine Anzeige am Standort (A) des Hausgerätes (2) betätigt wird.

8. Verfahren nach einem der vorhergehenden Ansprüche, **dadurch gekennzeichnet, dass** die Zeitinformation (8) in zeitlichen Abständen wiederholt an das Hausgerät (2) über das Netz (3) übertragen wird, wobei die Übersendung aufeinanderfolgender Informationen vorzugsweise in einem genau festgelegten zeitlichen Abstand erfolgt.

9. Verfahren nach einem der vorhergehenden Ansprüche, **dadurch gekennzeichnet, dass** die Übermittlung der Zeitinformation (8) in eine Übermittlung einer vollständigen Zeitangabe und die Übersendung von Impulsen zur Zeitfortschreibung in dem Hausgerät (2) aufgeteilt wird.

10. Verfahren nach einem der vorhergehenden Ansprüche, **dadurch gekennzeichnet, dass** der Zugang eines Hausgerätes (2) bzw. dessen Verbindung mit dem verteilten Netz (3) als globalem Netz direkt oder indirekt erfolgt, insbesondere über ein lokales Netzwerk (14), beispielsweise ein HES oder ein ähnliches System.

11. Verfahren nach einem der vorhergehenden Ansprüche, **dadurch gekennzeichnet, dass** die über das Netz (3) übersandte Zeitinformation (8) bei Anbindung des Hausgerätes (2) an ein lokales Netz (14) an dem Standort (A) des Haushalts zur Zeitbestimmung in weiteren entsprechend ausgestatteten Geräten genutzt wird.

12. Vorrichtung zur Übermittelung einer Zeitinformation von einem Dienstanbieter zu einem Hausgerät, das über ein verteiltes Netzwerk mit dem Dienstanbieter in Verbindung steht und die Zeitinformation empfängt, zur Durchführung des Verfahrens gemäß einem der Ansprüche 1 bis 11, **dadurch gekennzeichnet, dass** das Hausgerät (2) einen Speicherbaustein umfasst, in welchem eine Basisinformation, die eine Seriennummer und/oder eine individuelle Gerätenummer des Hausgerätes (2) umfasst, abspeicherbar ist, dass das Hausgerät (2) zur Abgabe einer Meldung (7) mit der Basisinformation an den Dienstanbieter (6) ausgebildet ist, und dass der Dienstanbieter (6) mit einer elektronischen Recheneinheit (5) derart ausgestattet ist, dass die Zeitinformation (8) an das Hausgerät (2) unter Verwendung der Seriennummer und/oder der Gerätenummer als Adresse aufgrund der Meldung (7) selektiv versendbar ist.

13. Vorrichtung nach Anspruch 12, **dadurch gekennzeichnet, dass** das Hausgerät (2) mit einem Mittel für eine internen Zeitfortschreibung derart ausgestattet ist, so dass die interne Zeitfortschreibung anhand der Zeitinformation (8) synchronisierbar ist.

14. Vorrichtung nach einem der Ansprüche 12 oder 13, **dadurch gekennzeichnet, dass** das Hausgerät (2) ein Display zur Anzeige von lokaler Uhrzeit und/oder Programmrestzeit und/oder Endezeitvorwahl und/oder Startzeitvorwahl aufweist.

15. Vorrichtung nach einem der Ansprüche 12 bis 14, **dadurch gekennzeichnet, dass** als Netzwerk (3) ein globales Netzwerk und insbesondere das Internet vorgesehen ist, mit dem das Hausgerät (2) vorzugsweise über eine Telefonleitung verbunden ist.

16. Vorrichtung nach einem der Ansprüche 12 bis 15, **dadurch gekennzeichnet, dass** das Hausgerät (2) über eine Stromversorgungsleitung (13) mit dem Dienstanbieter (6) verbunden ist.

17. Vorrichtung nach einem der Ansprüche 12 bis 16, **dadurch gekennzeichnet, dass** das Hausgerät (2) über eine drahtlose Datenverbindung mit einem Dienstvermittler (5) oder dem Dienstanbieter (6) direkt verbunden ist.

## Claims

1. Method of providing time information in a domestic appliance, wherein the domestic appliance is connected by way of a distributed network with a service provider and receives time information by way of the network from this service provider, **characterised in that** the domestic appliance (2) communicates basic information to a service provider (6) by a report (7) in order to effect communication of time information (8) and that the service provider (6) transmits the time information (8) by way of the network (3) selectively to the domestic appliance (2) on the basis of the report (7).

2. Method according to claim 1, **characterised in that** the basic information comprises a serial number and/or an appliance number of the domestic appliance (2) and that the time information (8) is transmitted to the domestic appliance (2) with use of the serial number and/or appliance number as address.

3. Method according to claim 1 or 2, **characterised in that** the domestic appliance (2) transmits the report (7) to the service provider (6) by way of the network (3) at the start of a program.

4. Method according to one of claims 1 to 3, **characterised in that** current state parameters of the domestic appliance (2) are transmitted in the report (7) at the same time.

5. Method according to one of claims 1 to 4, **characterised in that** the domestic appliance (2) transmits the report (7) to the service provider (6) by way of the network (3) when requiring a service, particularly an optimum machine program or an update of control software for the domestic appliance (2).

6. Method according to one of claims 1 to 5, **characterised in that** the requirements or reports of the domestic appliance (2) are evaluated and/or collated by the service provider in order to create differentiated customer profiles for own and/or outside use and/or to transmit individual and/or situation-related advertising by way of the network (3).

7. Method according to one of the preceding claims, **characterised in that** a display at the location (A) of the domestic appliance (2) is actuated on the basis of the time information (8).

8. Method according to one of the preceding claims, **characterised in that** the time information (8) is repeatedly transmitted to the domestic appliance (2) by way of the network (3) at intervals in time, wherein the transmission of successive items of information preferably takes place at a precisely fixed time interval.

9. Method according to one of the preceding claims, **characterised in that** the communication of the time information (8) is divided up into a communication of a complete time statement and transmission of signals for time updating in the domestic appliance (2).

10. Method according to one of the preceding claims, **characterised in that** the access of a domestic appliance (2) or connection thereof with the distributed network (3) as global network takes place directly or indirectly, particularly by way of a local network (14), for example an HES or a similar system.

11. Method according to one of the preceding claims, **characterised in that** the time information (8) transmitted by way of the network (3) on coupling of the domestic appliance (2) to a local network (14) is used at the location (A) of the domestic appliance for determination of time in further, correspondingly equipped appliances.

12. Device for communicating time information from a service provider to a domestic appliance, which is connected with the service provider by way of a distributed network and receives the time information, for carrying out the method according to one of claims 1 to 11, **characterised in that** the domestic appliance (2) comprises a memory module in which basic information comprising a serial number and/or an individual appliance number of the domestic appliance (2) can be stored, that the domestic appliance (2) is constructed for issue to the service provider (6) of a report (7) with the basic information and that the service provider (6) is equipped with an electronic computer unit (5) in such a manner that the time information (8) can be selectively transmitted to the domestic appliance (2) on the basis of the report (7) with use of the serial number and/or the appliance number as address.

13. Device according to claim 12, **characterised in that** the domestic appliance (2) is equipped with means for an internal time updating in such a manner that the internal time updating can be synchronised on the basis of the time information (8).

14. Device according to one of claims 12 and 13, **characterised in that** the domestic appliance (2) comprises a display for indication of local clock time and/or program residual time and/or end time preselection and/or start time preselection.

15. Device according to one of claims 12 to 14, **characterised in that** a global network and in particular the Internet is provided as network (3), with which the domestic appliance (2) is connected preferably by way of a telephone line.

16. Device according to one of claims 12 to 14, **characterised in that** the domestic appliance (2) is connected with the service provider (6) by way of a power supply line (13).

17. Device according to one of claims 12 to 16, **characterised in that** the domestic appliance (2) is directly connected with a service intermediary (5) or the service provider (6) by way of a wire-free data connection.

## Revendications

1. Procédé de mise à disposition d'une information de temps dans un appareil électroménager, l'appareil électroménager étant relié à un fournisseur de services par l'intermédiaire d'un réseau réparti et recevant l'information de temps de ce fournisseur de services par l'intermédiaire du réseau, **caractérisé en ce que** dans un message (7), l'appareil électroménager (2) transmet à un fournisseur de services (6) une information de base qui a pour effet la transmission d'une information de temps (8) et **en ce que** sur base du message (7), le fournisseur de services (6) envoie sélectivement à l'appareil électroménager (2) et par l'intermédiaire du réseau (3) l'information de temps (8).

2. Procédé selon la revendication 1, **caractérisé en ce que** l'information de base contient le numéro de série et/ou le numéro de l'appareil électroménager (2) et **en ce que** l'information de temps (8) est envoyée à l'appareil électroménager (2) en utilisant comme adresse son numéro de série et/ou son numéro d'appareil.

3. Procédé selon les revendications 1 ou 2, **caractérisé en ce que** lors du démarrage d'un programme, l'appareil électroménager (2) envoie le message (7) au fournisseur de services (6) par l'intermédiaire du réseau (3).

4. Procédé selon l'une des revendications 1 à 3, **caractérisé en ce que** des paramètres de l'état actuel de l'appareil électroménager (2) sont envoyés conjointement dans le message (7).

5. Procédé selon l'une des revendications 1 à 4, **caractérisé en ce qu'**en cas de demande d'un service, en particulier d'un programme de machine optimisé ou d'une mise à jour d'un logiciel de commande de l'appareil électroménager (2), l'appareil électroménager (2) envoie le message (7) au fournisseur de services (6) par l'intermédiaire du réseau (3).

6. Procédé selon l'une des revendications 1 à 5, **caractérisé en ce que** les demandes ou messages de l'appareil électroménager (2) sont évalués ou rassemblés par le fournisseur de services pour établir des profils individuels de clients destinés à être utilisés par lui-même ou par des tiers et/ou pour envoyer par l'intermédiaire du réseau (3) des publicités individuelles et/ou ciblées en fonction de la situation.

7. Procédé selon l'une des revendications précédentes, **caractérisé en ce qu'**un affichage prévu sur le site d'installation (A) de l'appareil électroménager (2) est activé à partir des informations de temps (8).

8. Procédé selon l'une des revendications précédentes, **caractérisé en ce que** l'information de temps est envoyée de manière répétée par l'intermédiaire du réseau (3) à l'appareil électroménager (2) à des intervalles de temps, les envois successifs d'informations ayant de préférence lieu à des intervalles de temps définis avec précision.

9. Procédé selon l'une des revendications précédentes, **caractérisé en ce que** la transmission des informations de temps (8) est divisée en une transmission d'une donnée de temps complète et en l'envoi d'impulsions de suivi du temps dans l'appareil électroménager (2).

10. Procédé selon l'une des revendications précédentes, **caractérisé en ce que** l'accès d'un appareil électroménager (2) au réseau réparti (3) constitué par un réseau global ou sa liaison à ce dernier s'effectuent directement ou indirectement et en particulier par l'intermédiaire d'un réseau local (14), par exemple un HES ou un système similaire.

11. Procédé selon l'une des revendications précédentes, **caractérisé en ce que** lorsque l'appareil électroménager (2) est raccordé à un réseau local (14) situé sur le site (A) du logement, l'information de temps (8) envoyée par l'intermédiaire du réseau (3) est utilisée pour définir l'heure dans d'autres appareils configurés de manière appropriée.

12. Dispositif en vue de la transmission d'une information de temps par un fournisseur de services à un appareil électroménager qui est relié au fournisseur de services par l'intermédiaire d'un réseau réparti et qui reçoit l'information de temps, en vue de la mise en oeuvre du procédé selon l'une des revendications 1 à 11, **caractérisé en ce que** l'appareil électroménager (2) comporte un module de mémoire dans lequel une information de base qui contient le numéro de série et/ou le numéro individuel de l'appareil électroménager (2) peut être conservée, **en ce que** l'appareil électroménager (2) est configuré pour envoyer au fournisseur de services (6) un message (7) qui contient l'information de base et **en ce que** le fournisseur de services (6) est équipé d'une unité électronique de calcul (5) qui permet, en réponse au message (7), d'envoyer l'information de temps (8) sélectivement à l'appareil électroménager (2) en recourant comme adresse à son numéro de série et/ou à son numéro d'appareil.

13. Dispositif selon la revendication 12, **caractérisé en ce que** l'appareil électroménager (2) est équipé d'un moyen de suivi du temps interne, de telle sorte que le suivi de temps interne peut être synchronisé sur l'information de temps (8).

14. Dispositif selon l'une des revendications 12 ou 13, **caractérisé en ce que** l'appareil électroménager (2) présente un écran d'affichage de l'heure locale et/ou de la durée restante d'un programme et/ou de la présélection d'une heure de fin et/ou d'une heure de démarrage du programme.

15. Procédé selon l'une des revendications 12 à 14, **caractérisé en ce que** comme réseau (3), on prévoit un réseau global et en particulier l'Internet, auquel l'appareil électroménager (2) est relié de préférence par une ligne téléphonique.

16. Dispositif selon l'une des revendications 12 à 15, **caractérisé en ce que** l'appareil électroménager (2) est relié au fournisseur de services (6) par une ligne d'alimentation en courant (13).

17. Dispositif selon l'une des revendications 12 à 16, **caractérisé en ce que** l'appareil électroménager (2) est relié directement à un fournisseur d'accès (5) ou au fournisseur de services (6) par l'intermédiaire d'une liaison de données sans fils.
